# EUROPÄISCHE PATENTANMELDUNG

(11) **EP 1 753 064 A2**
(43) Veröffentlichungstag der Anmeldung: **14.02.2007**
(21) Anmeldenummer: 06112070.5
(22) Anmeldetag: 31.03.2006
(51) Int. Cl.: H01M 8/06

(54) **Verfahren zur Erzeugung von Prozesswärme und/oder elektrischer Energie**

(30) Priorität: 10.08.2005 DE 102005037856
(71) Anmelder: Voith Patent GmbH, 89522 Heidenheim (DE)
(72) Erfinder: Döling, Fabian, 40668 Meerbusch (DE)
(74) Vertreter: Kunze, Klaus

(57) **Zusammenfassung**

Bei einem Verfahren zur Erzeugung von Prozesswärme und/oder elektrischer Energie für die Zellstoffherstellung, für die Stoffaufbereitung und/oder für eine Maschine zur Herstellung und/oder Veredelung einer Faserstoffbahn, insbesondere Papier- oder Kartonbahn, wird aus den bei der Zellstoffherstellung, der Stoffaufbereitung und/oder der Herstellung und/oder Veredelung der Faserstoffbahn anfallenden Abfallprodukten und/oder aus den bei wenigstens einem anderen Herstellungsprozess anfallenden Abfallprodukten Gas mit möglichst hohem Wasserstoffanteil erzeugt und dieses wasserstoffreiche Gas zur Erzeugung der erforderlichen Prozesswärme und/oder erforderlichen elektrischen Energie verwendet.

## Beschreibung

Die Erfindung betrifft ein Verfahren zur Erzeugung von Prozesswärme und/oder elektrischer Energie für die Zellstoffherstellung, für die Stoffaufbereitung und/oder für eine Maschine zur Herstellung und/oder Veredelung einer Faserstoffbahn, insbesondere Papier- oder Kartonbahn.

Die Prozesswärme für Zellstoffherstellungsanlagen, Stoffaufbereitungsanlagen und Papiermaschinen wurde bisher durch Verbrennung fossiler Brennstoffe oder von Abfallprodukten erzeugt. Die elektrische Energie für Papiermaschinen wurde in entfernten Kraftwerken erzeugt.

Der Erfindung liegt die Aufgabe zugrunde, ein verbessertes Verfahren der eingangs genannten Art zu schaffen. Dabei soll insbesondere auch der Einsatz von regenerativen Energien und/oder alternativen Brennstoffen möglich sein.

Diese Aufgabe wird erfindungsgemäß dadurch gelöst, dass aus den bei der Zellstoffherstellung, der Stoffaufbereitung und/oder der Herstellung und/oder Veredelung der Faserstoffbahn anfallenden Abfallprodukten und/oder aus den bei wenigstens einem anderen Herstellungsprozess anfallenden Abfallprodukten Gas mit möglichst hohem Wasserstoffanteil erzeugt und dieses wasserstoffreiche Gas zur Erzeugung der erforderlichen Prozesswärme und/oder erforderlichen elektrischen Energie verwendet wird.

Aufgrund dieser Ausgestaltung können insbesondere auch regenerative Energien und/oder alternative Brennstoffe genutzt werden, wobei insbesondere auch Abfallprodukte, die bei der Zellstoffherstellung und/oder der Stoffaufbereitung bzw. Faserherstellung in der betreffenden Anlage und/oder bei der Herstellung und/oder Veredelung einer Faserstoffbahn in der betreffenden Maschine bzw. Papiermaschine anfallen, einer sinnvollen Nutzung zugeführt werden. Zudem ist nunmehr insbesondere auch eine dezentrale Energieerzeugung möglich.

Die Stoffaufbereitung ist Teil des Papierherstellungsprozesses, der der Papiermaschine vorgelagert ist und aus zahlreichen Maschinen bzw. Verfahrensstufen besteht. In der Stoffaufbereitung werden die verschiedenen Halbstoffarten als Primärfaserstoffe (Zellstoff, Holzstoffe) oder Sekundärfaserstoffe (unterschiedliche Altpapiersorten) aufbereitet. Aus den aufbereiteten Stoffen oder Stoffmischungen wird dann auf der Papiermaschine das gewünschte Produkt mit den geforderten Eigenschaften erzeugt.

Der aufzubereitende Halbstoff liegt in Ballenform, als lose Ware oder in Suspensionsform (in integrierten Fabriken mit vorgelagerter Holzstoffanlage oder Zellstofffabrik) vor. Je nach Halbstoffart und Anforderungen an den aufbereiteten Stoff besteht die Stoffaufbereitung aus verschiedenen, unterschiedlich vielen Teilprozessen. Wesentliche Prozessschritte der Stoffaufbereitung mit direktem technologischem Einfluss auf die Qualität des erzeugten Papiers sind Zerfaserung, Sortierung, Zentrifugalreinigung (Reinigung), Flotation, Wäsche, Dispergierung, Bleiche und Mahlung. Wichtige Hilfsprozesse sind Fördern, Entwässern, Stapeln und Mischen.

Bei der Zellstoffaufbereitung steht die Mahlung im Vordergrund, während bei der Aufbereitung von Altpapier das Abtrennen oder Neutralisieren von störenden Bestandteilen die Hauptaufgaben sind. Derartige störende Fremdstoffe sind z.B. Metall- und Plastikteile, Kleber (Stickies), Druckfarben, Farbstoffe und teilweise auch Füllstoffe und Pigmente.

Die Stoffaufbereitung kann prinzipiell als ein Prozess in drei Ebenen gesehen werden. Die erste Ebene ist die Produktionsebene, die den direkten Weg vom Halbstoff zum Fertigstoff (Ganzstoff) für die Papier- oder Kartonmaschine darstellt. Die zweite Ebene beinhaltet die Rückgewinnungsebene, in der aus den in der Produktionsebene abgetrennten Stoffströmen Faser- und Feststoffe sowie Wasser zurückgewonnen werden. Die dritte Ebene ist die Austragsebene, in der die abgetrennten Fraktionen (Rejekte) sowie Prozesswasser für die Entsorgung aufbereitet werden. Die einzelnen Prozessschritte werden zu Stoffaufbereitungssystemen zusammengefasst, die diese Prozessschritte in geeigneter Weise zusammenschalten und teilweise den gleichen Prozessschritt auch mehrfach einsetzen, um den jeweiligen Anforderungen zu entsprechen.

Als Abfallprodukte können gemäß einer zweckmäßigen Ausgestaltung des erfindungsgemäßen Verfahrens insbesondere Rinde, Fasern, Randbeschnitt und/oder dergleichen verwendet werden.

Die verwendeten Abfallprodukte können zunächst auch in Methanol umgewandelt werden. Alternativ oder zusätzlich ist insbesondere auch der Einsatz einer so genannten DMFC (Direct Methanole Fuel Cell) denkbar.

Gemäß einer bevorzugten praktischen Ausgestaltung des erfindungsgemäßen Verfahrens werden die verwendeten Abfallprodukte zunächst einem Reformer zugeführt. Dabei können die Kohlenwasserstoffe der verwendeten Abfallprodukte mittels des Reformers beispielsweise durch eine Autotherme Reformierung, eine Partielle Oxidation oder eine Dampfreformierung in ein wasserstoffreiches und ein kohlenmonoxidreiches Gas umgesetzt werden.

Zur Umsetzung von Kohlenmonoxid in weiteres wasserstoffreiches Gas können dem Reformer eine oder auch mehrere Shift-Stufen nachgeschaltet werden.

Von Vorteil ist insbesondere auch, wenn dem Reformer bzw. der Shift-Stufe zur weiteren Kohlenmonoxid-Reduktion wenigstens eine weitere Prozessstufe nachgeschaltet wird.

Gemäß einer zweckmäßigen praktischen Ausgestaltung wird dem Reformer als weitere Prozessstufe eine Stufe zur Druckwechseladsorption nachgeschaltet. Alternativ oder zusätzlich kann dem Reformer als weitere Prozessstufe z.B. auch eine Stufe zur selektiven Oxidation nachgeschaltet werden.

In dem Fall, dass die bei der Zellstoffherstellung, der Stoffaufbereitung und/oder der Herstellung und/oder Veredelung der Faserstoffbahn anfallenden Abfallprodukte und/oder die bei wenigstens einem anderen Herstellungsprozess anfallenden Abfallprodukte zur Deckung des Energiebedarfs nicht ausreichen, können dem Reformer zusätzliche Kohlenwasserstoffe und/oder zusätzlich H₂ zugeführt werden. Dabei ist beispielsweise eine Zufuhr von zusätzlichen Kohlenwasserstoffen in Form von Erdgas, Biomasse, Holzschnipsel und/oder dergleichen denkbar. Wenn H₂ verfügbar ist, d.h. z.B. ein H₂-Netz vorhanden ist, kann, wie bereits erwähnt. zusätzlich insbesondere auch H₂ zugeführt werden.

Bevorzugt wird die Prozesswärme und/oder elektrische Energie jeweils an der Stelle der Zellstoffherstellungsanlage, Stoffaufbereitungsanlage bzw. Maschine zur Herstellung und/oder Veredelung einer Faserstoffbahn erzeugt, an der sie benötigt wird. Die Prozesswärme und/oder elektrische Energie kann also jeweils an, in oder nahe an dem betreffenden zu beheizenden bzw. mit elektrischer Energie zu versorgenden Aggregat der betreffenden Anlage bzw. Maschine erzeugt werden.

Vorteilhafterweise wird die Prozesswärme und/oder elektrische Energie mittels wenigstens einer Brennstoffzelle aus dem erhaltenen wasserstoffreichen Gas und/oder aus zusätzlichem Wasserstoff beispielsweise aus einem Netz oder Tank erzeugt. Bevorzugt wird die Prozesswärme durch vorzugsweise katalytische Verbrennung des erhaltenen Wasserstoffs oder Methanols und/oder zusätzlichen Wasserstoffs beispielsweise aus einem Netz oder Tank erzeugt.

Die Erfindung wird im folgenden anhand von Ausführungsbeispielen unter Bezugnahme auf die Zeichnung näher erläutert; in dieser zeigen:
- Figur 1: ein Schaubild zur Umwandlung von Biomasse (Kohlenwasserstoffe) in Wasserstoff (H₂),
- Figur 2: ein Prozessschaubild zur Erzeugung von Prozesswärme und/oder elektrischer Energie für eine Anlage zur Zellstoffherstellung,
- Figur 3: ein Prozessschaubild zur Erzeugung von Prozesswärme und/oder elektrischer Energie für eine Anlage zur Stoffaufbereitung bzw. Faserherstellung, und
- Figur 4: ein Prozessschaubild zur Erzeugung von Prozesswärme und/oder elektrischer Energie für eine Maschine zur Herstellung und/oder Veredelung einer Faserstoffbahn.

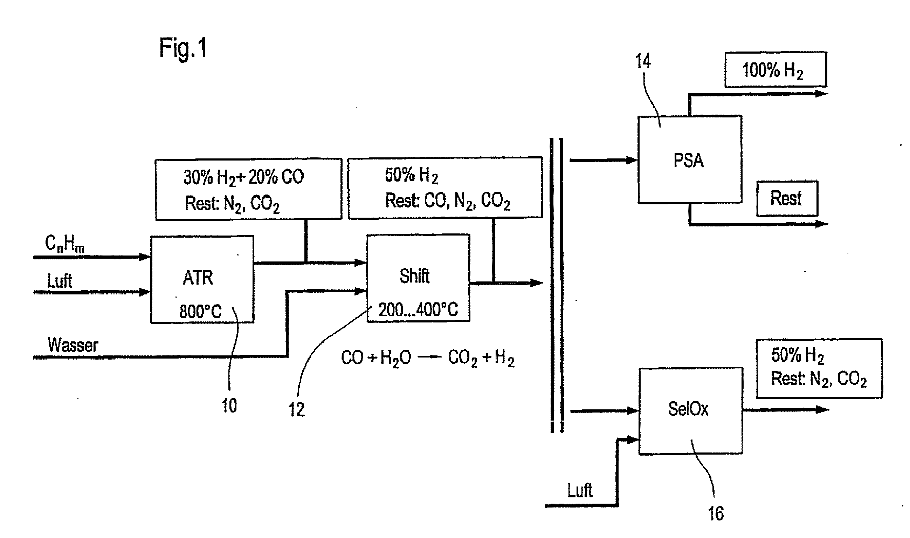

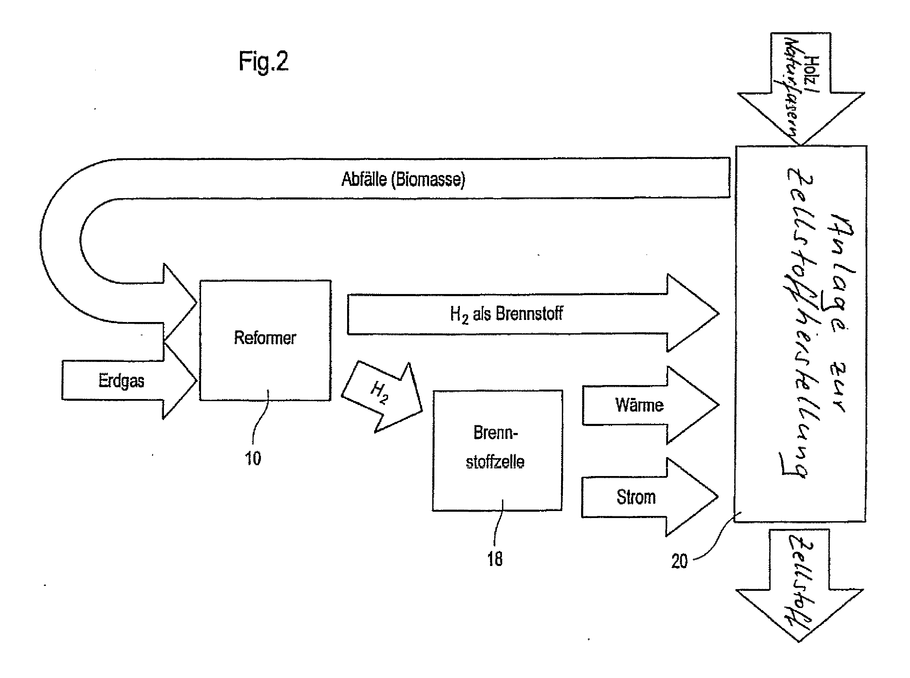

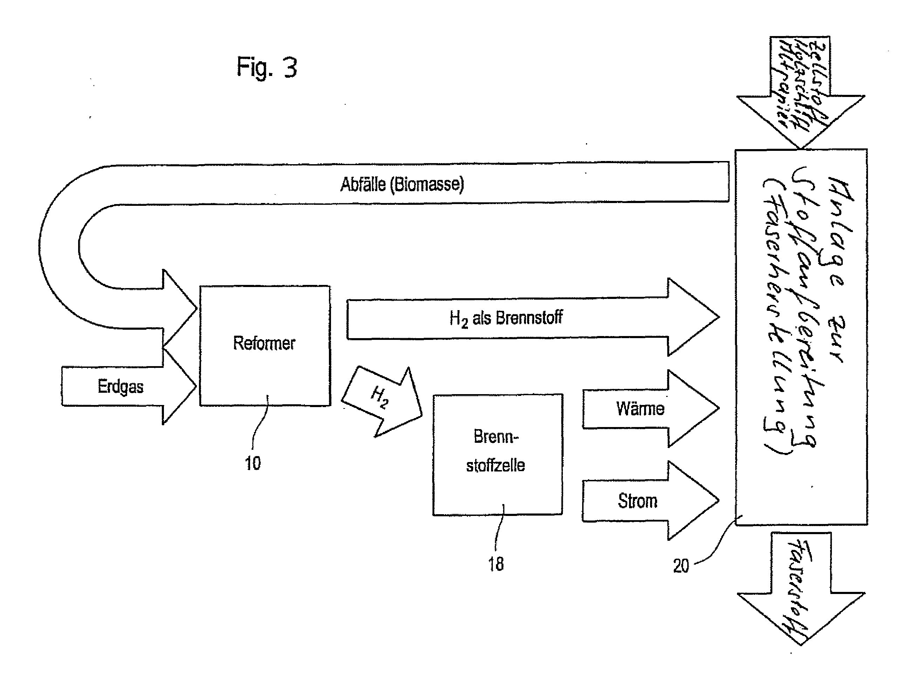

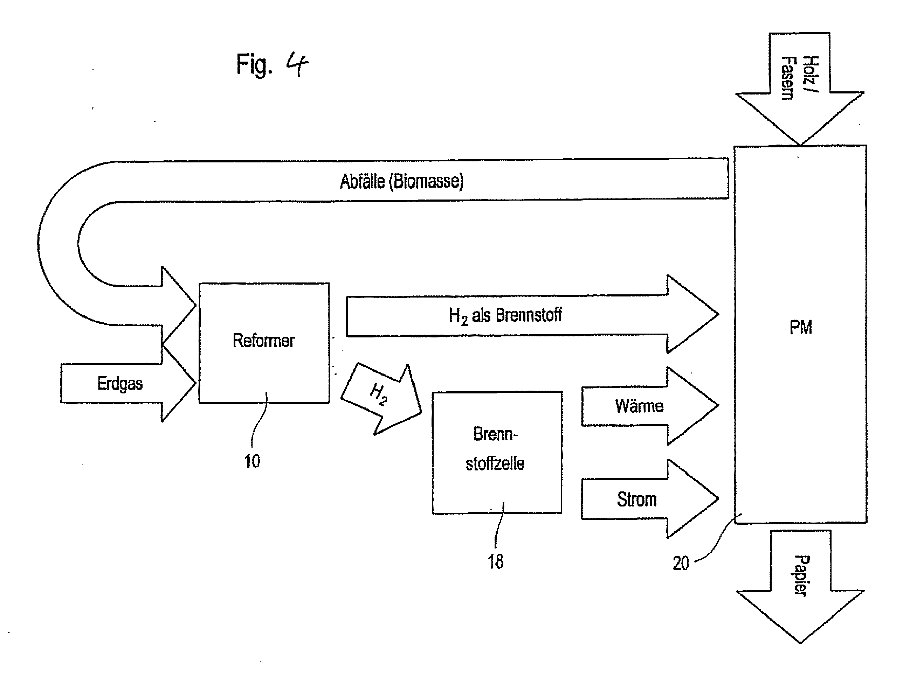

Anhand der Figuren 1 bis 4 werden im Folgenden rein beispielhaft vorteilhafte Ausgestaltungen des erfindungsgemäßen Verfahrens zur Erzeugung von Prozesswärme und/oder elektrischer Energie für eine Anlage zur Zellstoffherstellung (vgl. Figuren 1 und 2), eine Anlage zur Stoffaufbereitung bzw. Faserherstellung (vgl. Figuren 1 und 3) und eine Maschine zur Herstellung und/oder Veredelung einer Faserstoffbahn, insbesondere Papier- oder Kartonbahn (vgl. Figuren 1 und 4), erläutert. Bei der betreffenden Maschine kann es sich insbesondere um eine Papiermaschine einschließlich eventueller Aggregate zur Veredelung der Faserstoff- bzw. Papierbahn handeln.

Dabei wird zunächst aus den bei der Zellstoffherstellung, der Stoffaufbereitung bzw. Faserherstellung und/oder der Herstellung und/oder Veredelung der Faserstoffbahn anfallenden Abfallprodukten Gas mit möglichst hohem Wasserstoffanteil erzeugt. Dieses wasserstoffreiche Gas wird dann zur Erzeugung der erforderlichen Prozesswärme und/oder erforderlichen elektrischen Energie verwendet.

Bei den Abfallstoffen kann es sich beispielsweise um Rinde, für den weiteren Herstellungsprozess nicht mehr brauchbare Fasern, Randbeschnitt und/oder dergleichen, also generell um Biomasse bzw. Kohlenwasserstoffe handeln. Alternativ oder zusätzlich können grundsätzlich auch aus wenigstens einem anderen Herstellungsprozess usw. anfallende Abfallprodukte verwendet werden. Außer Biomasse ist insbesondere auch ein Einsatz von Erdgas, Alkoholen und/oder dergleichen denkbar.

Die verwendeten Abfallprodukte können auch zunächst in Methanol umgewandelt werden.

Die Figuren 2 bis 4 zeigen jeweils ein Schaubild zur Umwandlung von Biomasse (Kohlenwasserstoffe) in Wasserstoff H₂, wobei, wie bereits erwähnt, außer Biomasse beispielsweise auch Erdgas, Alkohole und/oder dergleichen eingesetzt werden können.

Wie anhand des Schaubildes der Figur 1 zu erkennen ist, können die Biomasse bzw. die verwendeten Abfallprodukte zunächst einem Reformer 10 zugeführt werden. Durch diesen Reformer 10 werden die betreffenden Kohlenwasserstoffe CₙHₘ in ein wasserstoffreiches Gas und ein kohlenmonoxidreiches Gas umgesetzt. Dazu wird dem Reformer 10 außer den Kohlenwasserstoffen CₙHₘ auch Luft zugeführt. Im Fall einer Autothermen Reformierung und einer Dampfreformierung wird auch zusätzlich noch Wasser zugeführt. Im Fall einer Partiellen Oxidation wird nur Luft zugeführt. Durch das Vorschalten des Reformers 10 kann der jeweilige Energieträger (z.B. Biomasse) also katalytisch in Wasserstoff bzw. ein wasserstoffreiches Gas umgewandelt werden. Dies geschieht im vorliegenden Fall beispielsweise bei einer Temperatur von etwa 800°C.

Die Kohlenwasserstoffe CₙHₘ der Biomasse bzw. der verwendeten Abfallprodukte können mittels des Reformers 10 beispielsweise durch eine Autotherme Reformierung, eine Partielle Oxidation oder eine Dampfreformierung in ein wasserstoffreiches und ein kohlenmonoxidreiches Gas umgesetzt werden. Dabei kann dem Reformer 10 zur Umsetzung von Kohlenmonoxid in weiteres wasserstoffreiches Gas eine Shift-Stufe 12 nachgeschaltet werden.

Im vorliegenden Fall erfolgt beispielsweise eine Dampfreformierung, bei der aus Kohlenwasserstoffen CₙHₘ in zwei Schritten Wasserstoff gewonnen wird. Im ersten Schritt wird im Reformer 10 der Kohlenwasserstoff CₙHₘ zunächst in ein wasserstoffreiches und ein kohlenoxidreiches Gas umgesetzt. Das dabei entstandene Kohlenmonoxid (CO) wird nun getrennt und im zweiten Schritt, d.h. in der Shift-Stufe 12 mit Wasser oder Wasserdampf versetzt, so dass nochmals ein Anteil Wasserstoff entsteht. Die betreffende Reaktionsgleichung lautet wie folgt:

CO + H₂O → CO₂ + H₂.

H₂ und CO werden also nicht getrennt. CO und H₂O reagieren "selektiv" miteinander.

Dem Reformer 10 bzw. der Shift-Stufe 12 kann zur weiteren Kohlenmonoxid-Reduktion wenigstens eine weitere Prozessstufe nachgeschaltet werden.

Dabei kann dem Reformer 10 bzw. der Shift-Stufe 12 als weitere Prozessstufe beispielsweise eine Stufe 14 zur Druckwechseladsorption und/oder eine Stufe 16 zur selektiven Oxidation nachgeschaltet werden.

Die Stufe zur Druckwechseladsorption (PSA, Pressure Swing Adsorption) kann insbesondere die folgenden Schritte umfassen:
- Adsorption bei hohem Druck
- Druckabsenkung
- Spülen mit Produktgas bei niedrigem Druck
- Druckaufbau mit Rohgas bzw. Produktgas.

Bei der selektiven CO-Oxidation (Stufe 16) kann unter Sauerstoff- oder Luftzufuhr mit Hilfe eines Katalysators selektiv das Kohlenmonoxid zu CO₂ oxidiert werden. Der Wasserstoffgehalt des Synthesegases bleibt dabei zumindest im wesentlichen erhalten.

In dem Fall, dass die bei der Herstellung und/oder Veredelung der Faserstoffbahn anfallenden Abfallprodukte zur Deckung des Energiebedarfs nicht ausreichen, können dem Reformer 10 zusätzliche Kohlenwasserstoffe zugeführt werden. Dabei können diese zusätzlichen Kohlenwasserstoffe dem Reformer 10 beispielsweise in Form von Erdgas, Biomasse, Holzschnipseln und/oder dergleichen zugeführt werden.

Die Prozesswärme und/oder elektrische Energie wird vorzugsweise jeweils an der Stelle der Maschine erzeugt, an der sie benötigt wird. Die Prozesswärme und/oder elektrische Energie kann also jeweils an, in oder nahe an dem betreffenden zu beheizenden bzw. mit elektrischer Energie zu versorgenden Aggregat der betreffenden Anlage bzw. Maschine erzeugt werden.

Wie anhand der Figuren 2 bis 4 jeweils zu erkennen ist, kann die Prozesswärme und/oder elektrische Energie insbesondere mittels wenigstens einer Brennstoffzelle 18 aus dem erhaltenen wasserstoffreichen Gas erzeugt werden. Die Prozesswärme wird also bevorzugt durch katalytische Verbrennung des erhaltenen Wasserstoffs oder Methanols erzeugt werden.

Figur 2 zeigt ein Prozessschaubild zur Erzeugung der Prozesswärme bzw. elektrischen Energie für eine Anlage zur Zellstoffherstellung, der beispielsweise Holz, Naturfasern und/oder dergleichen zugeführt werden und die Zellstoff liefert.

Figur 3 zeigt ein Prozessschaubild zur Erzeugung der Prozesswärme bzw. elektrischen Energie für eine Anlage zur Stoffaufbereitung bzw. Faserherstellung, der beispielsweise Zellstoff, Holzschliff, Altpapier und/oder dergleichen zugeführt werden und die Faserstoff liefert.

Grundsätzlich können für eine betreffende Anlage oder Maschine auch bei einer anderen Anlage bzw. Maschine anfallende Abfallprodukte verwendet werden. Wie bereits erwähnt, können alternativ oder zusätzlich insbesondere auch bei wenigstens einem anderen Herstellungsprozess oder dergleichen anfallende Abfallprodukte herangezogen werden.

Figur 4 zeigt ein Prozessschaubild zur Erzeugung der Prozesswärme bzw. elektrischen Energie für eine Papiermaschine 20, der Holz, Fasern und/oder dergleichen zugeführt werden und die Papier liefert.

Anhand der Prozessschaubilder der Figuren 2 bis 4 ist nochmals zu erkennen, dass in der betreffenden Anlage bzw. Papiermaschine 20 anfallende Abfälle bzw. Biomasse einem Reformer 10 zugeführt werden. Diesem Reformer 10 wird in den vorliegenden Fällen beispielsweise zudem Erdgas zugeführt.

Der über den Reformer 10 erhaltene Wasserstoff H₂ wird zum einen als Brennstoff direkt der Papiermaschine 20 zugeführt. Zum anderen wird vom Reformer 10 erzeugter Wasserstoff H₂ wenigstens einer Brennstoffzelle 18 zugeführt, die im vorliegenden Fall sowohl Prozesswärme als auch elektrische Energie für die betreffende Anlage bzw. Papiermaschine 20 liefert.

### Bezugszeichenliste

- 10: Reformer
- 12: Shift-Stufe
- 14: Stufe zur Druckwechseladsorption
- 16: Stufe zur selektiven Oxidation
- 18: Brennstoffzelle
- 20: Papiermaschine

## Patentansprüche

1. Verfahren zur Erzeugung von Prozesswärme und/oder elektrischer Energie für die Zellstoffherstellung, für die Stoffaufbereitung und/oder für eine Maschine (20) zur Herstellung und/oder Veredelung einer Faserstoffbahn, insbesondere Papier- oder Kartonbahn,
**dadurch gekennzeichnet ,**
**dass** aus den bei der Zellstoffherstellung, der Stoffaufbereitung und/oder der Herstellung und/oder Veredelung der Faserstoffbahn anfallenden Abfallprodukten und/oder aus den bei wenigstens einem anderen Herstellungsprozess anfallenden Abfallprodukten Gas mit möglichst hohem Wasserstoffanteil erzeugt und dieses wasserstoffreiche Gas zur Erzeugung der erforderlichen Prozesswärme und/oder erforderlichen elektrischen Energie verwendet wird.

2. Verfahren nach Anspruch 1,
**dadurch gekennzeichnet ,**
**dass** als Abfallprodukte Rinde, Fasern, Randbeschnitt und/oder dergleichen verwendet werden.

3. Verfahren nach Anspruch 1 oder 2,
**dadurch gekennzeichnet ,**
**dass** die verwendeten Abfallprodukte zunächst in Methanol umgewandelt werden und/oder dass eine DMFC (Direct Methanole Fuel Cell) eingesetzt wird.

4. Verfahren nach einem der vorhergehenden Ansprüche,
**dadurch gekennzeichnet ,**
**dass** die verwendeten Abfallprodukte zunächst einem Reformer (10) zugeführt werden.

5. Verfahren nach Anspruch 4,
**dadurch gekennzeichnet ,**
**dass** Kohlenwasserstoffe der verwendeten Abfallprodukte mittels des Reformers (10) durch eine Autotherme Reformierung in ein wasserstoffreiches und ein kohlenmonoxidreiches Gas umgesetzt werden.

6. Verfahren nach Anspruch 4,
**dadurch gekennzeichnet ,**
**dass** Kohlenwasserstoffe der verwendeten Abfallprodukte mittels des Reformers (10) durch eine Partielle Oxidation in ein wasserstoffreiches und ein kohlenmonoxidreiches Gas umgesetzt werden.

7. Verfahren nach Anspruch 4,
**dadurch gekennzeichnet ,**
**dass** Kohlenwasserstoffe der verwendeten Abfallprodukte mittels des Reformers (10) durch eine Dampfreformierung in ein wasserstoffreiches und ein kohlenmonoxidreiches Gas umgesetzt werden.

8. Verfahren nach einem Ansprüche 4 bis 7,
**dadurch gekennzeichnet ,**
**dass** dem Reformer (10) zur Umsetzung von Kohlenmonoxid in weiteres wasserstoffreiches Gas eine Shift-Stufe (12) nachgeschaltet wird.

9. Verfahren nach einem Ansprüche 4 bis 8,
**dadurch gekennzeichnet ,**
**dass** dem Reformer (10) bzw. der Shift-Stufe (12) zur weiteren Kohlenmonoxid-Reduktion wenigstens eine weitere Prozessstufe (14, 16) nachgeschaltet wird.

10. Verfahren nach Anspruch 9,
**dadurch gekennzeichnet ,**
**dass** dem Reformer (10) als weitere Prozessstufe eine Stufe (14) zur Druckwechseladsorption nachgeschaltet wird.

11. Verfahren nach Anspruch 9 oder 10,
**dadurch gekennzeichnet ,**
**dass** dem Reformer (10) als weitere Prozessstufe eine Stufe (16) zur selektiven Oxidation nachgeschaltet wird.

12. Verfahren nach einem der vorhergehenden Ansprüche,
**dadurch gekennzeichnet ,**
**dass** in dem Fall, dass die bei der Zellstoffherstellung, der Stoffaufbereitung und/oder der Herstellung und/oder Veredelung der Faserstoffbahn anfallenden Abfallprodukte und/oder die bei wenigstens einem anderen Herstellungsprozess anfallenden Abfallprodukte zur Deckung des Energiebedarfs nicht auseichen, dem Reformer (10) zusätzliche Kohlenwasserstoffe und/oder zusätzlich H₂ zugeführt werden.

13. Verfahren nach Anspruch 12,
**dadurch gekennzeichnet ,**
**dass** die zusätzlichen Kohlenwasserstoffe dem Reformer (10) in Form von Erdgas, Biomasse, Holzschnipseln und/oder dergleichen zugeführt werden.

14. Verfahren nach einem der vorhergehenden Ansprüche,
**dadurch gekennzeichnet ,**
**dass** die Prozesswärme und/oder elektrischer Energie jeweils an der Stelle der Zellstoffherstellungsanlage, Stoffaufbereitungsanlage bzw. Maschine (20) zur Herstellung und/oder Veredelung einer Faserstoffbahn erzeugt wird, an der sie benötigt wird.

15. Verfahren nach Anspruch 14,
**dadurch gekennzeichnet ,**
**dass** die Prozesswärme und/oder elektrischer Energie jeweils an, in oder nahe an dem betreffenden zu beheizenden bzw. mit elektrischer Energie zu versorgenden Aggregat der betreffenden Anlage bzw. Maschine (20) erzeugt wird.

16. Verfahren nach einem der vorhergehenden Ansprüche,
**dadurch gekennzeichnet ,**
**dass** die Prozesswärme und/oder elektrische Energie mittels wenigstens einer Brennstoffzelle (18) aus dem erhaltenen wasserstoffreichen Gas und/oder aus zusätzlichem Wasserstoff beispielsweise aus einem Netz oder Tank erzeugt wird.

17. Verfahren nach einem der vorhergehenden Ansprüche,
**dadurch gekennzeichnet ,**
**dass** die Prozesswärme durch vorzugsweise katalytische Verbrennung des erhaltenen Wasserstoffs oder Methanols und/oder zusätzlichen Wasserstoffs beispielsweise aus einem Netz oder Tank erzeugt wird.
